# EUROPÄISCHE PATENTANMELDUNG

(11) **EP 3 498 525 A1**
(43) Veröffentlichungstag der Anmeldung: **19.06.2019**
(21) Anmeldenummer: 18210160.0
(22) Anmeldetag: 04.12.2018
(51) Int. Cl.: B60L 58/13, H02J 7/00, B60L 1/00

(54) **KONTROLLSYSTEM UND VERFAHREN ZU STEUERUNG EINES SCHIENENFAHRZEUGS**

(30) Priorität: 08.12.2017 DE 102017129255
(71) Anmelder: Bombardier Transportation GmbH, 10785 Berlin (DE)
(72) Erfinder: Flerlage, Dr.-Ing. Heinz, 67133 Maxdorf (DE); Buschbeck, Jan, 13509 Berlin (DE)
(74) Vertreter: Zimmermann & Partner Patentanwälte mbB

(57) **Zusammenfassung**

Die Erfindung betrifft ein Kontrollsystem (4) zur Steuerung der Energieversorgung wenigstens eines Verbrauchers eines batteriebetriebenen Fahrzeuges, insbesondere für ein Schienenfahrzeug (1), mit wenigstens einem Messmittel zur Bestimmung des Ladezustandes der Batterie (8) und einer mit dem Messmittel verbundenen Steuereinrichtung (5) zum Deaktivieren des wenigstens einen Verbrauchers (6, 10) bei Erreichen eines vorbestimmten minimalen Ladezustands. Um die Wahrscheinlichkeit des Liegenbleibens des Fahrzeuges zu minimieren oder zu verringern, ist eine Benutzerschnittstelle (7) mit einem mit der Steuereinrichtung (5) signalübertragend verbundenen Bedienelement (25) vorgesehen, wobei durch die Betätigung des Bedienelementes (25) der wenigstens eine Verbraucher (6, 10) nach einer Deaktivierung reaktivierbar ist.

## Beschreibung

Die Erfindung betrifft ein Kontrollsystem zur Steuerung der Energieversorgung wenigstens eines Verbrauchers eines batteriebetriebenen Fahrzeuges, insbesondere für ein Schienenfahrzeug, mit wenigstens einem Messmittel zur Bestimmung des Ladezustandes der Batterie und einer mit dem Messmittel verbundenen Steuereinrichtung zum Deaktivieren des wenigstens einen Verbrauchers bei Erreichen eines vorbestimmten minimalen Ladezustands (SOC).

Ein Problem batteriebetriebener Fahrzeuge im Vergleich zu Fahrzeugen, die mit einem Verbrennungsmotor oder auf elektrifizierten Strecken betrieben werden, ist ihre verhältnismäßig geringe Reichweite. Eine schlichte Erweiterung der Reichweite durch eine Erhöhung der Kapazität der Batterien ist durch das Platzangebot und die maximale Traglast der Fahrzeuge begrenzt. Aus diesem Grund werden laufend neue Verfahren und Technologien entwickelt, welche eine Vergrößerung der Reichweite, ein schnelleres Aufladen der Batterien oder ein verbessertes Energiemanagement und somit einen geringeren Energieverbrauch zum Ziel haben.

Die DE 10252292 A1 offenbart ein Verfahren zur Steuerung der Energieverteilung in einem Fahrzeug. Indem Wertigkeit-Mengen-Funktionen für Energiequellen und für Energieverbraucher aufgestellt und entsprechend Wertigkeiten berechnet werden, sollen Auswirkungen von Engpässen bei der Leistungsbereitstellung minimiert werden. Dabei gibt die Wertigkeit-Mengen-Funktion bzgl. eines Energieverbrauchers an, wie wichtig der Bezug einer bestimmten Leistung ist, und bzgl. einer Energiequelle, wie groß die Bereitschaft zur Abgabe einer bestimmten Leistung ist.

In der EP 1925493 A2 wird vorgeschlagen, zwischen Energiespeichern auf einem Fahrzeug, die jeweils für einen bestimmten Energieverbraucher, z.B. Hilfsbetriebe oder Traktionseinrichtungen konfiguriert sind, einen Austausch von Energie zu ermöglichen.

Die EP 0537081 B1 beschreibt ein Verfahren zur Regelung des Energieverbrauchs, bei dem auf Grundlage der zurückzulegenden Strecke zunächst die notwendige Energiemenge bestimmt und mit der im Energiespeicher des Fahrzeuges vorhandenen Energie verglichen wird. Auf Grundlage dieses Vergleichs wird die Traktionseinrichtung des Fahrzeuges derart gesteuert, dass die dem Motor bereitgestellte Leistung bei nur annähernd ausreichender Energiemenge beschränkt wird.

In der DE 102014220048 A1 wird ein Verfahren zur Anpassung eines Batteriepaketladezustandsfensters an die Neigung des befahrenen Straßenabschnitts offenbart.

Trotz der Vielfalt möglicher Maßnahmen zur Verbesserung der Reichweite bleibt diese ein begrenzender Faktor batteriebetriebener Fahrzeuge, d.h. batteriebetriebene Fahrzeuge werden bis in den Grenzbereich ihrer Reichweite betrieben.

Gemäß der WO2015136189A1 kann die Zuverlässigkeit der Prognose der Reichweite eines elektrisch betriebenen Fahrzeuges erhöht werden, indem ein Teil der in der Batterie gespeicherten Energie erst während der Fahrt des Fahrzeuges und abhängig vom Energieverbrauch während der Fahrt in die Prognoserechnung einbezogen wird. Insgesamt kann somit die Zuverlässigkeit eines elektrisch betriebenen Fahrzeuges verbessert werden.

Bei unerwarteten Umständen, z.B. bei Auftreten von Verkehrsbehinderungen kann es dennoch vorkommen, dass die verfügbare elektrische Energie vor Erreichen des Ziels bzw. der nächsten Nachlademöglichkeit verbraucht ist. Derartige Szenarien sind insbesondere bei Schienenfahrzeugen problematisch, zum einen wegen der großen möglichen Zahl von Fahrgästen, zum anderen weil die Fahrzeuge auf Streckenabschnitten, wo diese einem erhöhtem Gefahrenpotential ausgesetzt sind, z.B. in Tunneln oder auf Brücken, liegen bleiben können. Das Abschleppen von liegen gebliebenen Schienenfahrzeugen ist zudem aufwendig und teuer.

Aufgabe der vorliegenden Erfindung ist folglich, ein Kontrollsystem zu schaffen, durch welches die Wahrscheinlichkeit des Liegenbleibens des Fahrzeuges minimiert oder verringert wird.

Diese Aufgabe wird erfindungsgemäß mit einem Kontrollsystem nach Anspruch 1 gelöst. Weiterhin wird die Aufgabe mit einem Verfahren nach Anspruch 12 gelöst.

Das erfindungsgemäße Kontrollsystem zur Steuerung der Energieversorgung wenigstens eines Verbrauchers eines batteriebetriebenen Fahrzeuges, insbesondere für ein Schienenfahrzeug, umfasst wenigstens ein Messmittel zur Bestimmung des Ladezustandes der Batterie, eine mit dem Messmittel verbundene Steuereinrichtung zum Deaktivieren des wenigstens einen Verbrauchers bei Erreichen eines vorbestimmten minimalen Ladezustandes (State of Charge (SOC)). Durch eine Benutzerschnittstelle mit einem mit der Steuereinrichtung signalübertragend verbundenen Bedienelement erhält der Fahrer, insbesondere der Zugführer, Zugriff auf die Steuereinrichtung. Durch die Betätigung des Bedienelementes kann der wenigstens eine Verbraucher, der zuvor durch die Steuereinrichtung deaktiviert wurde, reaktiviert werden.

Der Begriff "Batterie" wird im Folgenden als allgemeine Bezeichnung eines wiederaufladbaren Energiespeichers zur Speicherung elektrischer Energie verstanden. Entsprechend bezeichnet "batteriebetriebenes Fahrzeug" ein Fahrzeug, dessen Antrieb von einem wiederaufladbaren Energiespeicher mit elektrischer Energie versorgt wird.

In erster Linie können für den Betrieb des Fahrzeuges wesentliche Verbraucher über die Steuereinrichtung reaktivierbar sein, um ein Fortsetzen einer begonnenen Fahrt zu ermöglichen. Ein reaktivierbarer Verbraucher kann der Antrieb des Fahrzeuges sein, insbesondere die Traktionseinrichtung bzw. der Antriebsmotor. Die erfindungsgemäße Lösung ermöglicht somit, mit "leerem" Energiespeicher per Eingabe die Traktionseinrichtung zu aktivieren um trotz aufgebrauchter, im Normalbetrieb nutzbarer Energie weiterzufahren. Ein Aktivieren der Traktionseinrichtung muss vom Fahrzeugführer bestätigt werden, um eine Wahrnehmung des Fahrzeugführers zu erreichen, dass der Energiespeicher an der Grenze seiner Kapazität betrieben wird.

Alternativ oder zusätzlich können die Klimaanlage, im Fahrzeug angeordnete Steckdosen, im Passagierraum angeordnete Bildschirme und/oder Türantriebe durch die Steuereinrichtung abschaltbar und/oder reaktivierbar ausgestaltet sein.

Gemäß einer vorteilhaften Weiterbildung der Erfindung ist die Steuereinrichtung durch die Betätigung des Bedienelementes von einem Standardmodus in einen Reservemodus überführbar.

Der Reservemodus soll vor allem die Mobilität des Fahrzeuges gewährleisten, um das Fahrzeug zur nächsten Haltestation oder aus Gefahrenzonen herausbewegen zu können. Während in dem Standardmodus der Verbraucher durch die Steuereinrichtung bei Erreichen eines ersten Mindestladezustandes abschaltbar ist, ist in dem Reservemodus der Verbraucher durch die Steuereinrichtung erst bei Erreichen eines zweiten Mindestladezustandes abschaltbar ist.

Der Reservemodus kann eine gegen über dem Standardmodus unterschiedliche Steuerung von einem oder mehreren Verbrauchern umfassen. Die maximal von der Batterie an die Traktionseinrichtung übertragbare Leistung kann in dem Reservemodus reduziert sein, um die Dauer des Leistungsbezuges zu erhöhen. Das Beschleunigungsvermögen und/oder die maximale Fahrtgeschwindigkeit des Fahrzeuges können entsprechend herabgesetzt sein.

In einer weiteren Ausgestaltung des Reservemodus kann die Leistung der Heizung oder Klimaanlage, der Beleuchtung oder die Leistung von in dem Fahrzeug angeordneten Stromanschlüssen für Fahrgäste, wie Notebook- oder USB-Anschlüsse reduziert oder abgeschaltet sein.

Gemäß einer weiteren möglichen Ausgestaltung der Erfindung kann vorgesehen sein, dass die Steuereinrichtung in einen Notlaufmodus überführbar ist. Der Notlaufmodus kann in besonderen Gefahrensituationen aktivierbar sein, um eine maximale Mobilität des Fahrzeuges zu erreichen. Der Verbraucher, insbesondere die Traktionseinrichtung, kann z.B. durch eine erneute Betätigung des Bedienelementes erneut reaktivierbar sein. Alternativ kann ein weiteres, mit der Steuereinrichtung signalübertragend verbundenes Bedienelement vorgesehen sein, durch das der Notlaufmodus bzw. die Reaktivierung des Verbrauchers auslösbar ist. In dem Notlaufmodus kann der Verbraucher aktiviert bleiben, ohne Berücksichtigung einer möglichen, schädlichen Tiefentladung, um eine maximale Mobilität des Fahrzeuges zu gewährleisten. Insbesondere kann die Traktionseinrichtung aktiviert sein. Um die verfügbare elektrische Energie auf den Antrieb zu konzentrieren, können bei aktivierter Traktionseinrichtung sämtliche weiteren Verbraucher deaktiviert sein.

Die Aktivierung des Notlaufmodus entspricht einer Reichweitenverlängerung durch Nutzung der Restenergie in dem Energiespeicher bzw. der Batterie, wobei mögliche Schäden an der Batterie durch eine Tiefentladung zur Erhöhung der Reichweite in Kauf genommen werden. Die verfügbare Restenergie wird im Normalbetrieb des Fahrzeugs nicht angezeigt, obwohl der Energiespeicher weiterhin Energie enthält, dieser Entladebereich jedoch im Regelbetrieb nicht genutzt wird.

Zur Bestimmung der Reichweite des Fahrzeuges kann die Steuereinrichtung eine Recheneinheit zur Bestimmung der verbleibenden Reichweite umfassen. Für eine möglichst genaue Bestimmung der Reichweite kann die Berücksichtigung verschiedener Parameter sinnvoll sein. Die Steuereinrichtung kann entsprechend wenigstens eine Schnittstelle zur Aufnahme von Parametern aufweisen. Vorzugsweise kann die Benutzerschnittstelle zur Eingabe von inneren und/oder äußeren Parametern und/oder eines Streckenziels ausgestaltet sein.

Die Bestimmung der Reichweite kann auf äußeren Parametern, inneren Parametern, dem derzeitigen Ladezustand der Batterie und/oder dem ersten und/oder dem zweiten minimalen Ladezustand basieren.

Um die Reichweite über die Recheneinheit bestimmen zu können und die Recheneinheit mit erforderlichen Parametern zu versorgen, kann die Benutzerschnittstelle zur Eingabe von inneren und/oder äußeren Parametern und/oder eines Streckenziels ausgestaltet sein. Entsprechend kann die Benutzerschnittstelle zur Eingabe dieser Parameter ausgestaltet sein.

Zu den äußeren Parametern, auf denen die Bestimmung der Reichweite des Fahrzeuges basieren kann, können gehören: Die verfügbare Fahrzeit, das Gefälle der zu befahrenden Strecke, die Außentemperatur des Fahrzeuges, die Lichtverhältnisse, die Anzahl der Haltestellen, die Windverhältnisse. Die verfügbare Fahrzeit eines Fahrzeuges des öffentlichen Verkehrs kann sich z.B. aus dem Fahrplan des Fahrzeuges ergeben. Das momentane Streckengefälle, die Außentemperatur des Fahrzeuges, die Lichtverhältnisse und/oder die Windverhältnisse können über mit der Steuereinrichtung signalübertragend verbundene Sensoren erfassbar sein.

Die inneren, für die Bestimmung der Reichweite relevanten Parameter betreffen Eigenschaften des Fahrzeuges. Bevorzugt weist die Steuereinrichtung Mittel zur Aufnahme oder Eingabe eines oder mehrerer der folgenden inneren Parameter zur Bestimmung der Reichweite auf: Die Beladung, den Energiebedarf der Hilfsbetriebe, die Innentemperatur. Ist auf der noch zurückzulegenden Strecke eine Nachlademöglichkeit gegeben, kann die verfügbare Nachladezeit und/oder der verfügbare Ladestrom in die Bestimmung der Reichweite einbezogen werden.

Zur Erfassung der für die Bestimmung der Reichweite relevanten Parameter kann das Kontrollsystem Sensoren zur Erfassung von inneren und/oder äußeren Parametern umfassen. Es können Temperatursensoren zur Messung der Außen- und/oder Innentemperatur des Fahrzeuges, Lichtsensoren zur Bestimmung der Helligkeit und/oder Messeinrichtungen zur Bestimmung der Windverhältnisse, insbesondere der Windgeschwindigkeit in Fahrtrichtung, vorgesehen sein.

Der Recheneinheit kann ein Datenspeicher mit Kartendaten zugeordnet sein. Die Kartendaten können Informationen zur Streckenlänge umfassen, um auf Grundlage der Position des Fahrzeuges und eines Streckenziels die zu befahrende Strecke berechnen zu können. Um das Gefälle der gesamten zu befahrenden Strecke oder andere Eigenschaften der Strecke in die Bestimmung der Reichweite einbeziehen zu können, können in dem Datenspeicher Informationen über Eigenschaften der zur befahrenden Strecke hinterlegt sein. In den Kartendaten können zudem Informationen über Kurvenradien oder über die Anzahl und Lage von Haltestellen, Kurven, Tunnel und/oder Energieladestationen enthalten sein.

In den Kartendaten eines Schienenfahrzeuges können zudem Informationen über elektrifizierte Abschnitte der zu befahrenden Strecke enthalten sein. So können Teilabschnitte einer Schienenfahrzeugstrecke elektrifiziert sein, während andere Teilabschnitte keinen Anschluss an eine externe Energieversorgung aufweisen. Auf elektrifizierten Strecken ist eine Energiezuführung über einen Stromabnehmer möglich, wodurch die Traktionseinrichtung ohne Beanspruchung der Batterie von der externen Energiequelle gespeist werden kann. Des Weiteren kann die Batterie auf elektrifizierten Teilstrecken geladen werden, wodurch sich die Reichweite des Fahrzeuges erhöht.

Wird eine Strecke durch das Fahrzeug wiederholt befahren, können auch Informationen aus vergangenen Fahrten in die Bestimmung des Energieverbrauches einbezogen sein. Daten aus vergangenen Fahrten können entsprechend im Datenspeicher abgelegt werden. Beispielsweise kann der Energieverbrauch über einen gesamten Streckenabschnitt mit zugeordneten Parametern erfasst werden, um in zukünftigen Fahrten bei ähnlichen Parametern eine genauere Vorhersage des voraussichtlichen Energieverbrauches zu erhalten.

In einer weiteren vorteilhaften Ausgestaltung der Erfindung kann das Kontrollsystem Messmittel zur Bestimmung des Energieverbrauchs des Fahrzeuges umfassen. Der ermittelte Energieverbrauch des Fahrzeuges kann als Parameter für die Bestimmung der Reichweite des Fahrzeuges verwendet werden. Zusätzlich kann die Steuereinrichtung des Kontrollsystems ausgestaltet sein, den Energieverbrauch des Fahrzeuges zu erfassen und entsprechend der verfügbaren Energie zu regulieren.

Es kann eine Kommunikationsschnittstelle vorgesehen sein, über die das Kontrollsystem mit Hilfsbetrieben verbunden ist. Diese Kommunikationsschnittstelle kann zur Erfassung des Betriebszustandes von einem oder mehreren Hilfsbetrieben ausgestaltet sein. Alternativ oder zusätzlich können die Hilfsbetriebe über die Kommunikationsschnittstelle ansteuerbar sein, um z.B. bei geringer verfügbarer Energie den Energieverbrauch zu reduzieren. Es kann z.B. abhängig von dem Ladezustand der Batterien und der zurückzulegenden Strecke eine Absenkung der Heiz- und/oder Kühlleistung einer Klimaanlage vorgesehen sein.

In einem Verfahren zur Steuerung der Energieversorgung der Traktionseinrichtung eines batteriebetriebenen Fahrzeuges mit einem erfindungsgemäßen Kontrollsystem ist vorgesehen, dass zunächst der Ladezustand der Batterie gemessen wird. Die Messung des Ladezustandes kann kontinuierlich erfolgen. Bei Erreichen eines ersten Mindestladezustandes der Batterie wird die Energieversorgung wenigstens eines Verbrauchers abgeschaltet, um die Batterie vor einer Tiefentladung zu schützen oder eine Restlademenge aufrecht zu erhalten. Erst bei Betätigung des oben beschriebenen Bedienelementes wird die Energieversorgung des wenigstens einen Verbrauchers reaktiviert.

Der reaktivierbare Verbraucher kann insbesondere die Traktionseinrichtung sein. Um in Gefahrensituationen sicherzustellen, dass das Fahrzeug durch die Traktionseinrichtung bewegt werden kann, kann ausschließlich die Traktionseinrichtung reaktiviert werden.

Ein Teil der Batterieladung kann einer Reserveladung zugeordnet werden, ein weiterer Teil einer Notlaufladung. Nach Entladung der Batterie bis zur Reserveladung kann durch die Betätigung des Bedienelements der Reservemodus gestartet werden, nach einer Entladung der Batterie bis zur Notlaufladung der Notlaufmodus.

Zur Berücksichtigung der Reichweite bei der Steuerung des Fahrzeuges kann das Verfahren erfindungsgemäß mit folgenden Schritten ergänzt werden: Zunächst wird die Reichweite des Fahrzeuges bestimmt, z.B. anhand der vorhandenen Batterieladung. Anschließend wird das Streckenziel durch eine Eingabe auf der Benutzerschnittstelle empfangen. Das Streckenziel kann auf einer auf der Benutzerschnittstelle angezeigten Karte ausgewählt oder in einer Eingabemaske eingegeben werden. Alternativ kann das Streckenziel in einem Datensatz der Steuerung des Fahrzeuges gespeichert sein und durch das Kontrollsystem ausgelesen werden.

Die Position des Fahrzeuges durch eine Eingabe auf der Benutzerschnittstelle empfangen werden oder durch ein globales Positionsbestimmungssystem (GPS) erfasst werden. Auf Grundlage der Position des Fahrzeuges und des Streckenziels erfolgt anschließend die Berechnung der zurückzulegenden Strecke.

Die zurückzulegende Strecke wird nun mit der Reichweite des Fahrzeuges verglichen. Ist die Reichweite geringer als die zurückzulegende Strecke, erfolgt eine Reduzierung der Leistungsabgabe an den wenigstens einen Verbraucher oder eine vollständige Deaktivierung des Verbrauchers. Beispielsweise kann die Deaktivierung der Traktionseinrichtung erfolgen, um sicherzustellen, dass die Batterie nicht tiefentladen wird, ohne dass das Fahrzeug sein Ziel erreicht. Alternativ kann ein anderer Verbraucher, beispielsweise die Klimaanlage, deaktiviert werden, um den Energieverbrauch des Fahrzeuges zu verringern und somit die Reichweite zu erhöhen.

Die Reichweite des Fahrzeuges kann basierend auf äußeren Parametern, inneren Parametern dem derzeitigen Ladezustand der Batterie und dem ersten und/oder dem zweiten minimalen Ladezustand bestimmt werden.

Zur Bestimmung der Reichweite kann einer oder mehrere der folgenden inneren Parameter einbezogen werden: Die Beladung, der Energiebedarf der Hilfsbetriebe und/oder die Innentemperatur des Fahrzeuges.

Des Weiteren können zur Bestimmung der Reichweite einer oder mehrere der folgenden äußeren Parameter einbezogen werden: Die verfügbare Fahrzeit, das Gefälle der zu befahrenden Strecke, die Außentemperatur des Fahrzeuges, die Lichtverhältnisse, die Anzahl der Haltestellen und/oder die Windverhältnisse.

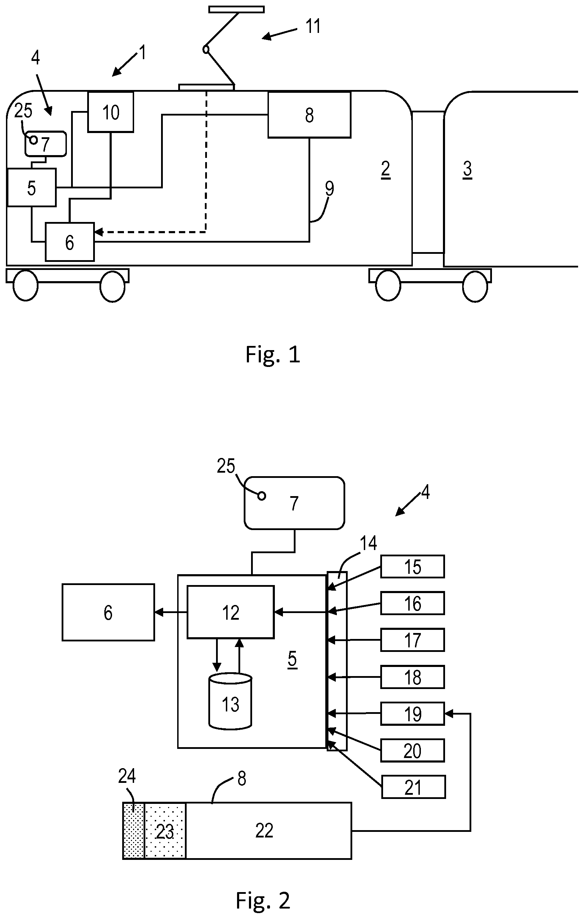

Die beiliegenden Zeichnungen veranschaulichen erfindungsgemäße Ausführungsformen und dienen zusammen mit der Beschreibung der Erläuterung der Prinzipien der Erfindung. Im Folgenden wird unter Bezugnahme auf die Figuren 1 und 2 ein bevorzugtes Ausführungsbeispiel des erfindungsgemäßen Kontrollsystems beschrieben.
Fig. 1 ist eine schematische Darstellung der Komponenten eines erfindungsgemäßen Kontrollsystems;
Fig. 2 ist eine schematische Darstellung eines Teils des in Fig. 1 gezeigten Kontrollsystems.

Fig. 1 zeigt ein Schienenfahrzeug 1, mit einem ersten Wagen 2 und einem zweiten Wagen 3. In dem ersten Wagen 2 befindet sich ein erfindungsgemäßes Kontrollsystem 4. Das Kontrollsystem 4 umfasst eine Steuereinrichtung 5, die zur Steuerung einer Traktionseinrichtung 6 ausgestaltet ist, sowie eine Benutzerschnittstelle 7.

Des Weiteren ist in dem ersten Wagen 2 eine Batterie 8 angeordnet, die der Energieversorgung der Traktionseinrichtung 6 dient. Dazu sind die Batterie 8 und die Traktionseinrichtung 6 über eine Energieleitung 9 energieleitend miteinander verbunden. Die Traktionseinrichtung 6 kann einen Elektromotor umfassen, der über eine elektrisch leitende Verbindung durch die Batterie 8 mit Energie versorgt wird.

In dem ersten Wagen 2 befindet sich zudem eine Klimaanlage 10, die der Klimatisierung eines (hier nicht gezeigten) Fahrgastraums bzw. eines Fahrzeugführerraumes dient. Wie die Traktionseinrichtung 6 wird auch die Klimaanlage 10 von der Batterie 8 mit Energie versorgt. Die Traktionseinrichtung 6 und die Klimaanlage 10 gehören somit zu den von der Batterie 8 gespeisten Verbrauchern des Fahrzeuges.

Um eine Energieversorgung durch eine externe Energiequelle zur ermöglichen, ist der erste Wagen 2 des Schienenfahrzeuges 1 zudem mit einem Stromabnehmer 11 ausgestattet. Auf elektrifizierten Strecken ist eine Energiezuführung über den Stromabnehmer 11 möglich, wodurch die Traktionseinrichtung 6 ohne Beanspruchung der Batterie 8 von der externen Energiequelle mit Energie versorgt werden kann. Des Weiteren kann die Batterie 8 auf elektrifizierten Teilstrecken geladen werden, wodurch sich die Reichweite des Schienenfahrzeuges 1 erhöht.

Ist die Batterie 8 entladen, d.h. eine der Nennkapazität der Batterie 8 entsprechende Energiemenge verbraucht, wird die Energieentnahme aus der Batterie 8 durch die Steuereinrichtung 5 oder die Ladesteuerung der Batterie 8 gestoppt oder gedrosselt. Durch die Batterie 8 gespeiste Verbraucher, insbesondere die Traktionseinrichtung 6, werden deaktiviert. Um insbesondere die Traktionseinrichtung 6 trotz der entladenen Batterie 8 zumindest für einen begrenzten Zeitraum reaktivieren zu können, weist die Benutzerschnittstelle 7 ein Bedienelement 25 auf, mit dessen Betätigung der Fahrzeugführer die Energieentnahme reaktivieren kann. Das Bedienelement 25 kann als grafisches Element auf einem Bedienpanel, z.B. auf einem Touchscreen umgesetzt werden. Um das Bewusstsein des Fahrzeugführers für die Betätigung des Bedienelementes 25 zu stärken, kann dieses auch von einem physischen Knopf oder Schalter gebildet sein.

Fig. 2 zeigt eine detailliertere schematische Darstellung des Aufbaus des Kontrollsystems 4. Die Steuereinrichtung 5 ist signalübertragend mit der Benutzerschnittstelle 7 verbunden. Um über die Benutzerschnittstelle 7 eingegebene Befehle und/oder Daten zu verarbeiten, ist eine Recheneinheit 12 vorgesehen. Die Recheneinheit 12 dient der Berechnung der Reichweite und/oder der dynamischen Steuerung des Fahrzeuges, insbesondere der Steuerung der Verbraucher, d.h. der Traktionseinrichtung 6 und der Klimaanlage 10.

Der Recheneinheit 12 des Schienenfahrzeugs 1 ist zudem ein Datenspeicher 13 zugeordnet, in welchem Parameter zur Bestimmung der Reichweite gespeichert sein können, wie z.B. Kartendaten. Die Kartendaten können Informationen zur Streckenlänge umfassen. Weitere im Datenspeicher 13 enthaltene Daten, auf welche die Recheneinheit 12 zugreifen kann, sind Informationen über Steigungen der Strecke, Kurvenradien, über die Anzahl und Lage von Haltestellen sowie von Kurven, Tunnel und/oder Energieladestationen. In den Kartendaten eines Schienenfahrzeuges können zudem Informationen über elektrifizierte Abschnitte der zu befahrenden Strecke enthalten sein.

Für eine möglichst genaue Bestimmung der Reichweite ist die Eingabe verschiedener Parameter vorgesehen. Zunächst kann die Benutzerschnittstelle 7 zur Eingabe von inneren und/oder äußeren Parametern und/oder eines Streckenziels verwendet werden. Die Steuereinrichtung 5 ist des Weiteren mit einer Schnittstelle 14 zur Aufnahme von Parametern ausgestattet.

Die Bestimmung der Reichweite kann auf äußeren Parametern, inneren Parametern, dem derzeitigen Ladezustand der Batterie 8 und/oder dem ersten und/oder dem zweiten minimalen Ladezustand basieren. Zu den äußeren Parametern gehören die verfügbare Fahrzeit, das Gefälle der zu befahrenden Strecke, die Außentemperatur des Fahrzeuges, die Lichtverhältnisse, die Anzahl der Haltestellen, die Windverhältnisse.

Die verfügbare Fahrzeit eines Fahrzeuges des öffentlichen Verkehrs kann sich z.B. aus dem Fahrplan des Fahrzeuges ergeben, der wie die Kartendaten auf dem Datenspeicher 13 abgelegt sein kann. Das momentane Streckengefälle, die Außentemperatur des Fahrzeuges, die Lichtverhältnisse und/oder die Windverhältnisse können über mit der Steuereinrichtung signalübertragend verbundene Sensoren erfassbar sein. Im Ausführungsbeispiel der Figur 2 sind ein Neigungssensor 15, ein Temperatursensor 16, ein Lichtsensor 17 und eine Windmesseinrichtung 18 vorgesehen. Des Weiteren sind an die Schnittstelle 14 eine Ladungsmesseinrichtung 19 zur Bestimmung der verbleibenden Batterieladung, die signalübertragend mit der Batterie 8 verbunden ist, sowie eine Verbrauchsmesseinrichtung 20 zur Bestimmung des laufenden Verbrauchs der an die Batterie 8 angeschlossenen Verbraucher angeschlossen. Über einen in das Fahrzeug integrierten Gewichtssensor 21 kann die Beladung des Fahrzeuges abgeschätzt werden.

Die aus den Sensoren 15, 16, 17, 21 und Messeinrichtungen 18, 19, 20 erfassten Parameter dienen der Recheneinheit 12 als Grundlage zur Bestimmung des Energieverbrauchs des Fahrzeuges, der in der Batterie 8 verbliebenen Energiemenge und/oder der verbleibenden Reichweite des Fahrzeuges.

Die Batterie 8 ist in Fig. 2 schematisch unterteilt, um die Aufteilung der Ladekapazität zu illustrieren. Im Standardmodus steht dem Fahrzeug die Nennkapazität 22 zur Verfügung. Ist die in der Nennkapazität 22 gespeicherte Energie verbraucht, wird die Batterie 8 bzw. die Traktionseinrichtung 6 deaktiviert. Nun kann der Fahrzeugführer über die Benutzerschnittstelle 7 einen Verbraucher, z.B. die Traktionseinrichtung 6, reaktivieren. Erst, wenn auch die in der Reservekapazität 23 gespeicherte Energie verbraucht ist, wird der Verbraucher erneut deaktiviert. Nun bleibt dem Fahrzeugführer für Notfälle die Möglichkeit, die Traktionseinrichtung 6 erneut zu reaktivieren, um das Fahrzeug unter Inanspruchnahme der in der Notlaufkapazität 24 gespeicherten Energie erneut zu bewegen. Dabei wird eine mögliche Tiefentladung und Schädigung der Batterie 8 in Kauf genommen.

Die beschriebenen und dargestellten spezifischen Ausführungsformen sind für die Ausführung der Erfindung nicht bindend, sondern können im Rahmen der vorliegenden Erfindung geeignet modifiziert werden, ohne vom Schutzbereich der vorliegenden Erfindung abzuweichen.

### Bezugszeichenliste

- 1: Schienenfahrzeug
- 2: erster Wagen
- 3: zweiter Wagen
- 4: Kontrollsystem
- 5: Steuereinrichtung
- 6: Traktionseinrichtung
- 7: Benutzerschnittstelle
- 8: Batterie
- 9: Energieleitung
- 10: Klimaanlage
- 11: Stromabnehmer
- 12: Recheneinheit
- 13: Datenspeicher
- 14: Schnittstelle
- 15: Neigungssensor
- 16: Temperatursensor
- 17: Lichtsensor
- 18: Windmesseinrichtung
- 19: Ladungsmesseinrichtung
- 20: Verbrauchsmesseinrichtung
- 21: Gewichtssensor
- 22: Nennkapazität
- 23: Reserveladekapazität
- 24: Notlaufladekapazität
- 25: Bedienelement

## Patentansprüche

1. Kontrollsystem (4) zur Steuerung der Energieversorgung wenigstens eines Verbrauchers eines batteriebetriebenen Fahrzeuges, insbesondere für ein Schienenfahrzeug 1, mit
a. wenigstens einem Messmittel zur Bestimmung des Ladezustandes einer Batterie (8),
b. einer mit dem Messmittel verbundenen Steuereinrichtung (5) zum Deaktivieren des wenigstens einen Verbrauchers (6, 10) bei Erreichen eines vorbestimmten minimalen Ladezustands,
**dadurch gekennzeichnet, dass** eine Benutzerschnittstelle (7) mit einem mit der Steuereinrichtung (5) signalübertragend verbundenen Bedienelement (25) vorgesehen ist, wobei durch die Betätigung des Bedienelementes (25) der wenigstens eine Verbraucher (6, 10) nach einer Deaktivierung reaktivierbar ist.

2. Kontrollsystem (4) nach Anspruch 1, **dadurch gekennzeichnet, dass** durch die Betätigung des Bedienelementes (25) die Steuereinrichtung (5) von einem Standardmodus in einen Reservemodus überführbar ist, wobei in dem Standardmodus der Verbraucher (6, 10) durch die Steuereinrichtung (5) bei Erreichen eines ersten Mindestladezustandes abschaltbar ist, und in dem Reservemodus der Verbraucher (6, 10) durch die Steuereinrichtung (5) erst bei Erreichen eines zweiten Mindestladezustandes abschaltbar ist.

3. Kontrollsystem (4) nach Anspruch 1 oder 2, **dadurch gekennzeichnet, dass** die Steuereinrichtung (5) eine Recheneinheit (12) zur Bestimmung der verbleibenden Reichweite umfasst.

4. Kontrollsystem (4) nach einem der obigen Ansprüche, **dadurch gekennzeichnet, dass** die Benutzerschnittstelle (7) zur Eingabe von inneren und/oder äußeren Parametern und/oder eines Streckenziels ausgestaltet ist.

5. Kontrollsystem (4) nach Anspruch 3 oder 4, **dadurch gekennzeichnet, dass** der Recheneinheit (12) ein Datenspeicher (13) mit Kartendaten zur Bestimmung der Streckenlänge auf Grundlage der Position des Fahrzeuges und eines Streckenziels zugeordnet ist.

6. Kontrollsystem (4) nach einem der obigen Ansprüche, **dadurch gekennzeichnet, dass** das Kontrollsystem (4) Sensoren zur Erfassung von inneren und/oder äußeren Parametern umfasst.

7. Kontrollsystem (4) nach Anspruch 6, **dadurch gekennzeichnet, dass** das Kontrollsystem (4) zur Erfassung von inneren Parametern über wenigstens eine Kommunikationsschnittstelle mit Hilfsbetrieben verbunden ist.

8. Kontrollsystem (4) nach einem der obigen Ansprüche, **dadurch gekennzeichnet, dass** das Kontrollsystem (4) Messmittel zur Bestimmung des Energieverbrauchs des Fahrzeuges umfasst.

9. Verfahren zur Steuerung der Energieversorgung der Traktionseinrichtung 6 eines batteriebetriebenen Fahrzeuges mit einem Kontrollsystem (4) nach einem der Ansprüche 1 bis 9, **gekennzeichnet durch** die Schritte:
a. Messung des Ladezustandes der Batterie (8),
b. Bei Erreichen eines ersten Mindestladezustandes der Batterie (8) Abschalten der Energieversorgung wenigstens eines Verbrauchers (6, 10),
c. Bei Betätigung des Bedienelementes (25) reaktivieren der Energieversorgung des wenigstens einen Verbrauchers (6, 10).

10. Verfahren nach Anspruch 9, **gekennzeichnet durch** die weiteren Schritte:
a. Berechnen der Reichweite des Fahrzeuges,
b. Empfang des Streckenziels durch eine Eingabe auf der Benutzerschnittstelle (7),
c. Empfang der Position des Fahrzeuges durch eine Eingabe auf der Benutzerschnittstelle (7) oder ein globales Positionsbestimmungssystem (GPS),
d. Berechnen der zurückzulegenden Strecke auf Grundlage der Position des Fahrzeuges und des Streckenziels,
e. Falls die Reichweite geringer als die zurückzulegende Strecke ist, Deaktivierung des wenigstens einen Verbrauchers (6, 10).

11. Verfahren nach Anspruch 10, **dadurch gekennzeichnet, dass** die Reichweite basierend auf äußeren Parametern, inneren Parametern, dem derzeitigen Ladezustand der Batterie (8) und/oder dem ersten oder dem zweiten minimalen Ladezustand bestimmt wird.

12. Verfahren nach Anspruch 11, **dadurch gekennzeichnet, dass** einer oder mehrere der folgenden inneren Parameter zur Bestimmung der Reichweite einbezogen wird: Die Beladung, der Energiebedarf der Hilfsbetriebe, der Energiebedarf des Fahrzeugs, die Innentemperatur.

13. Verfahren nach einem der Ansprüche 10 bis 12, **dadurch gekennzeichnet, dass** der ermittelte Energieverbrauch des Fahrzeuges und/oder einer oder mehrere der folgenden äußeren Parameter zur Bestimmung der Reichweite einbezogen werden:
Die verfügbare Fahrzeit, das Gefälle der zu befahrenden Strecke, die Außentemperatur des Fahrzeuges, die Lichtverhältnisse, die Anzahl der Haltestellen, die Windverhältnisse.

14. Verfahren nach einem der Ansprüche 9 bis 13, **dadurch gekennzeichnet, dass** die Steuereinrichtung (5), falls die bei Erreichen des ersten Mindestladezustandes basierend auf inneren und/oder äußeren Parametern berechnete Reichweite geringer als eine zurückzulegende Strecke ist, den Verbraucher erneut deaktiviert.
